# EUROPÄISCHE PATENTSCHRIFT

(11) **EP 2 540 547 B1**
(45) Veröffentlichungstag und Bekanntmachung des Hinweises auf die Patenterteilung: **13.08.2014**
(21) Anmeldenummer: 12172031.2
(22) Anmeldetag: 14.06.2012
(51) Int. Cl.: B60K 15/03

(54) **Kraftstofftankhalterung, insbesondere Treibgastankhalterung, für ein gewerbliches Fahrzeug**
Fuel tank holder, in particular propulsion fuel tank holder for a commercial vehicle
Fixation de réservoir de carburant, en particulier fixation de réservoir de gaz propulseur, pour un véhicule industriel

(30) Priorität: 01.07.2011 DE 102011078542
(43) Veröffentlichungstag der Anmeldung: 02.01.2013
(73) Patentinhaber: Jungheinrich Aktiengesellschaft, 22047 Hamburg (DE)
(72) Erfinder: Steinberger, Wolfgang, 85368 Moosburg (DE); Wimmer, Martin, 84032 Altdorf (DE)
(74) Vertreter: Jordan, Volker Otto Wilhelm

(56) Entgegenhaltungen:
- EP-A2- 0 381 188
- DE-A1- 19 729 228
- GB-B- 2 376 219
- JP-A- H1 089 154
- JP-A- 2000 264 077

## Beschreibung

Die Erfindung betrifft allgemein eine Kraftstofftankhalterung, insbesondere Treibgastankhalterung, für ein gewerbliches Fahrzeug, und speziell eine Kraftstofftankhalterung zur Halterung wenigstens eines Kraftstofftanks auf oder an einer (insbesondere freiliegenden) Oberfläche eines gewerblichen Fahrzeugs, insbesondere eines Flurförderzeugs oder Gabelstaplers. Es wird dabei vor allem (aber nicht ausschließlich) an eine derartige Kraftstofftankhalterung gedacht, die zur Halterung eines oder mehrerer Treibgastanks, etwa in Form einer oder mehrerer Gasdruckflaschen, geeignet und vorgesehen ist.

Die Erfindung betrifft genauer eine Kraftstofftankhalterung (bzw. Treibgastankhalterung) gemäß dem Oberbegriff des Anspruches 1 zur Halterung wenigstens eines Kraftstofftanks (bzw. Treibgastanks) auf oder an einer (insbesondere freiliegenden) Oberfläche eines gewerblichen Fahrzeugs wie eines Flurförderzeugs oder Gabelstaplers, umfassend:
- eine der Oberfläche zugeordnete stationäre Halterungsbasis, über die Gewichtskräfte und Trägheitskräfte des Kraftstofftanks an der Oberfläche oder einer Karosserie des Fahrzeugs abstützbar sind;
- eine mittels einer ersten Schwenkgelenkanordnung relativ zur Halterungsbasis schwenkbare Stütze, die zwischen einer ersten Betriebsstellung und einer ersten Ladestellung um eine sich mit einem Winkel zur Oberfläche erstreckende erste Schwenkachse relativ zur Halterungsbasis schwenkbar ist und über die zumindest in der ersten Ladestellung Gewichtskräfte des Kraftstofftanks an der Halterungsbasis und damit an der Oberfläche bzw. der Karosserie abstützbar sind; und
- eine zumindest in der ersten Ladestellung der Stütze mittels einer zweiten Schwenkgelenkanordnung relativ zur Stütze schwenkbare Tankaufnahme, die dafür ausgeführt ist, den wenigstens einen Kraftstofftank aufzunehmen und zu halten, und die zwischen einer zweiten Betriebsstellung und einer zweiten Ladestellung um eine sich mit einem Winkel zur ersten Schwenkachse erstreckende zweite Schwenkachse schwenkbar ist und über die zumindest in der ersten Ladestellung der Stütze Gewichtskräfte des Kraftstofftanks an der Stütze und damit an der Halterungsbasis abstützbar sind,
wobei die Tankaufnahme in deren zweiten Betriebsstellung durch eine Sicherungsmechanik gegen ein Verstellen aus der zweiten Betriebsstellung sicherbar ist.

Aus der GB 2 376 219 B ist eine gattungsgemäße Kraftstofftankhalterung zur Halterung wenigstens eines Kraftstofftanks auf oder an einer freiliegenden Oberfläche eines gewerblichen Fahrzeugs, insbesondere eines Flurförderzeugs oder Gabelstaplers bekannt, umfassend: eine der freiliegenden Oberfläche zugeordnete stationäre Halterungsbasis, über die Gewichtskräfte und Trägheitskräfte des Kraftstofftanks an der freiliegenden Oberfläche oder einer Karosserie des Fahrzeugs abstützbar sind; eine mittels einer ersten Schwenkgelenkanordnung relativ zur Halterungsbasis schwenkbare Stütze, die zwischen einer ersten Betriebsstellung und einer ersten Ladestellung um eine sich mit einem Winkel zur freiliegenden Oberfläche erstreckende erste Schwenkachse relativ zur Halterungsbasis schwenkbar ist und über die zumindest in der ersten Ladestellung Gewichtskräfte des Kraftstofftanks an der Halterungsbasis und damit an der freiliegenden Oberfläche bzw. der Karosserie abstützbar sind; und eine zumindest in der ersten Ladestellung der Stütze mittels einer zweiten Schwenkgelenkanordnung relativ zur Stütze schwenkbare Tankaufnahme, die dafür ausgeführt ist, den wenigstens einen Kraftstofftank aufzunehmen und zu halten, und die zwischen einer zweiten Betriebsstellung und einer zweiten Ladestellung um eine sich mit einem Winkel zur ersten Schwenkachse erstreckende zweite Schwenkachse schwenkbar ist und über die zumindest in der ersten Ladestellung der Stütze Gewichtskräfte des Kraftstofftanks an der Stütze und damit an der Halterungsbasis abstützbar sind. Bei der vorbekannten Kraftstofftankhalterung ist die Tankaufnahme in deren zweiten Betriebstellung durch eine Sicherungsmechanik gegen ein Verstellen aus der zweiten Betriebsstellung sicherbar, die zwischen der Stütze und der Tankaufnahme wirkt. Die Tankaufnahme ist also in deren zweiten Betriebsstellung durch eine zwischen der Stütze und der Tankaufnahme wirksame Fixierung gegen ein Verstellen aus der zweiten Betriebsstellung sicherbar.

Diese Sicherungsmechanik bzw. Fixierung umfasst einen in einem vorspringenden Winkelstück der Stütze verschieblich gelagerten, durch eine Feder vorgespannten Fixierungsstift, der wahlweise mit einer Fixierungsnut oder mit einer Fixierungsöffnung eines von der Tankaufnahme vorstehenden Winkelteils eingreift, um die Tankaufnahme in der zweiten Betriebsstellung zu halten (Eingriff in die Fixierungsnut) oder in der zweiten Ladestellung zu halten (Eingriff in die Fixierungsöffnung). Zum Lösen des jeweiligen Eingriffs kann der Fixierungsstift durch einen einen seitlich vorstehenden Griffabschnitt manuell aus dem Eingriff zurückgezogen werden, unter Kompression der Vorspannfeder.

Zur Dämpfung der Schwenkbewegung der Tankaufnahme beim Schwenken um die zweite Schwenkachse zur Überführung der Tankaufnahme zwischen der zweiten Betriebsstellung und der zweiten Ladestellung ist ein gasgefüllter Dämpfer vorgesehen, der zwischen der Stütze und der Tankaufnahme wirkt und auf die Tankaufnahme Schwenkkräfte ausübt, die in Richtung zur zweiten Betriebsstellung wirken.

Die erste Schwenkachse ist als sich in Vertikalrichtung erstreckende Schwenkachse gezeigt und die zweite Schwenkachse ist als sich in horizontaler Richtung erstreckende Schwenkachse gezeigt. Die Halterungsbasis ist dafür vorgesehen, mit einer oberen Oberfläche eines Gegengewichts eines Gabelstaplers verschraubt zu werden.

Zur hier verwendeten Nomenklatur sei angemerkt, dass die Angaben "erste" und "zweite" in Bezug auf die Betriebsstellung und die Ladestellung der Stütze bzw. in Bezug auf die Betriebsstellung und die Ladestellung der Tankaufnahme jeweils auf die Stütze bzw. auf die Tankaufnahme verweisen sollen. Ist also von einer ersten Betriebsstellung bzw. einer ersten Ladestellung die Rede, so ist eine Betriebsstellung bzw. eine Ladestellung der Stütze gemeint, die sich durch einen Schwenkwinkel um die erste Schwenkachse unterscheiden. Ist von einer zweiten Betriebsstellung bzw. einer zweiten Ladestellung die Rede, so ist eine Betriebsstellung bzw. eine Ladestellung der Tankaufnahme gemeint, die sich durch einen Schwenkwinkel um die zweite Schwenkachse unterscheiden. Es wird hierdurch nicht impliziert, dass die Tankaufnahme zusätzlich eine erste Ladestellung und eine erste Betriebsstellung hat. Die Begriffe "erste Ladestellung" und "erste Betriebsstellung" beziehen sich, wie ausgeführt, auf Schwenkstellungen der Stütze, nicht hingegen auf Schwenkstellungen der Tankaufnahme.

Es ist die Aufgabe der Erfindung, eine einfach zu bedienende Kraftstofftankhalterung bereitzustellen, welche eine hohe Sicherheit gegen Fehlbedienungen bietet.

Insgesamt soll eine Kraftstofftankhalterung der angesprochenen Art bereitgestellt werden, mit der wenigstens ein Kraftstofftank, insbesondere wenigstens eine Treibgasflasche, sich während des Betriebs des Fahrzeugs in einer festen Position an bzw. auf der Fahrzeugoberfläche gehalten wird und mit der der Kraftstofftank bzw. die Kraftstofftanks leicht und ergonomisch auswechselbar ist bzw. sind, indem der eine momentan gehaltene Kraftstofftank in eine ergonomisch günstige Position am Fahrzeug gebracht wird und aus dieser Position entfernt werden kann und der neue wenigstens eine Kraftstofftank in dieser ergonomisch günstigen Position der Kraftstofftankhalterung übergeben und dann mittels der Kraftstofftankhalterung in die feste Position überführt werden kann, in der das Fahrzeug dann sicher betrieben werden kann. Diese feste Position am Fahrzeug soll der ersten Betriebsstellung der Stütze und der zweiten Betriebsstellung der Tankaufnahme entsprechen.

Zur Lösung dieser Aufgabe wird erfindungsgemäß eine Kraftstofftankhalterung gemäß Anspruch 1 bereitgestellt, bei welcher die Sicherungsmechanik, mit der die Tankaufnahme in der zweiten Betriebsstellung gegen ein Verstellen aus der zweiten Betriebsstellung sicherbar ist, dafür ausgeführt ist, auf eine Schwenkbewegung der Stütze aus der ersten Betriebsstellung in die erste Ladestellung anzusprechen und das Verschwenken der Tankaufnahme um die zweite Schwenkachse aus der zweiten Betriebsstellung in die zweite Ladestellung freizugeben, wenn die Stütze die erste Ladestellung erreicht hat.

Es gibt im Prinzip viele Möglichkeiten, wie die Sicherungsmechanik ausgeführt sein kann. So sind rein mechanische als auch elektromechanische Lösungen denkbar. Bevorzugt ist vorgesehen, dass die Sicherungsmechanik einen mit der Tankaufnahme bewegungsverkoppelten, gegebenenfalls stationär an der Tankaufnahme angeordneten oder dieser zugehörigen Anschlag und einen direkt oder indirekt an der Halterungsbasis gehaltenen stationären Gegen-Anschlag umfasst, derart, dass ein gegenseitiger Eingriff zwischen dem Anschlag und dem Gegen-Anschlag in der ersten Betriebsstellung und vor Erreichen der ersten Ladestellung ein Verschwenken der Tankaufnahme um die zweite Schwenkachse aus der zweiten Betriebsstellung in Richtung zur zweiten Ladestellung blockiert und dass eine aus der Schwenkbewegung um die erste Schwenkachse resultierende relative Verstellung zwischen dem Anschlag und dem Gegen-Anschlag diese in eine in der ersten Ladestellung eingenommene relative Freigabestellung überführt, in der der Anschlag und der Gegenanschlag nicht eingreifen und die Verschwenkung der Tankaufnahme aus der zweiten Betriebsstellung in die zweite Ladestellung freigeben. Dabei kann der Gegen-Anschlag einfach ein auf einem der ersten Schwenkgelenkanordnung zugehörigen Lagerbolzen der Halterungsbasis gehaltenes, vorzugsweise plattenförmiges Anschlagselement umfassen. Um die Schwenkbewegung der Stütze aus der ersten Betriebsstellung in die erste Ladestellung nicht zu behindern, kann das Anschlagselement an einer mit dem Anschlag wechselwirkenden Seite vorteilhaft mit Gleitmaterial ausgeführt sein, beispielsweise einem Kunststoffmaterial. Man kann die Oberfläche des Anschlagselements bzw. des Gleitmaterials, die mit dem Anschlag wechselwirkt, als Schrägfläche ausführen und vorsehen, dass beim Überführen der Stütze in die erste Betriebsstellung eine zunehmende Spannung auf den Anschlag ausgeübt wird, um die Tankaufnahme in der zweiten Betriebsstellung ohne Bewegungsspielraum zu sichern, so dass ein Klappern der Tankaufnahme beim Fahren des Fahrzeugs so weit als möglich verhindert wird.

Der Anschlag kann einfach nur von einer vorstehenden Zunge einer Halterungsplatte der Tankaufnahme gebildet sein.

In der Regel wird es zweckmäßig sein, wenn die Tankaufnahme in ihrer zweiten Betriebsstellung bei in der ersten Betriebsstellung angeordneter Stütze an einem Auflager der Halterungsbasis abstützbar ist. Eine hohe Betriebssicherheit wird erreicht, wenn die Tankaufnahme mittels einer formschlüssigen Schließeinrichtung in der zweiten Betriebsstellung bei in der ersten Betriebsstellung angeordneter Stütze an der Halterungsbasis sicherbar ist. Hierzu wird weiterbildend vorgeschlagen, dass die Schließeinrichtung ein an der Halterungsbasis gehaltenes Schloss umfasst, welches mit einem Schließelement der Halterungsbasis in Schließeingriff bringbar ist, wobei das Schloss elektrisch oder mechanisch betätigbar ist, den Schließeingriff zu lösen. Zweckmäßig kann das Schloss einen elektrischen Schließsensor aufweisen, der auf den Zustand des Vorliegens des Schließeingriffs und den Zustand des gelösten Schließeingriffs anspricht und ein entsprechendes Zustandssignal an eine zugeordnete Steuereinrichtung insbesondere des Fahrzeugs abgibt. Es können Signalmittel vorgesehen sein, die ein den Zustand angebendes Signal geben. Die Steuereinrichtung kann eine Sicherungsfunktion derart erfüllen, dass bestimmte Funktionen des Fahrzeugs gesperrt sind, so lange der Schließeingriff nicht gegeben ist.

Betreffend die mechanische Realisierung der verschiedenen Komponenten der Kraftstofftankhalterung bestehen grundsätzlich viele Möglichkeiten. Gemäß einer zweckmäßigen Ausführungsform ist die Stütze als U-Profil-Arm ausgeführt. Hierzu wird weiterbildend vorgeschlagen, dass die pneumatische oder hydropneumatische Feder oder/und wenigstens eine abstützende Schwenkkräfte in Richtung zur zweiten Betriebsstellung auf die Tankaufnahme ausübende Feder an einer sich zwischen zwei einander entgegengesetzten U-Profill-Schenkeln des U-Profil-Arms gehaltenen Anlenkung angelenkt ist.

Die Halterungsbasis kann zweckmäßig versteift ausgeführt sein, vorzugsweise mit einem eine Halterungsbasisplatte versteifendem, an deren Unterseite angeordneten Aussteifungsprofil. Ein Gelenkelement der ersten Schwenkgelenkanordnung, beispielsweise ein Schwenkbolzen oder Schwenkzapfen, kann durch die Halterungsbasisplatte und das Aussteifungsprofil gemeinsam abgestützt sein. Das Aussteifungsprofil kann zweckmäßig als U-Profil ausgeführt sein, bevorzugt als in Richtung weg von der ersten Schwenkgelenkanordnung V-förmig sich verjüngendes U-Profil. Es bestehen aber auch andere oder zusätzlich vorsehbare Möglichkeiten zur Aussteifung der Halterungsbasis, beispielsweise durch eingeprägte Sicken. Es kann auch ein so genanntes Sandwich-Profil vorgesehen sein oder es kann ein oder können mehrere T-Träger vorgesehen sein.

Ein oder mehrere Halterungsplatten der Tankaufnahme, die Halterungsbasisplatte und das Aussteifungsprofil können zweckmäßig als Blechteile ausgeführt sein, die beispielsweise aus Blechtafeln mittels Laser herausgeschnitten sind. Auch die Stütze kann aus Blechmaterial hinreichender Dicke hergestellt sein, idealerweise mit einem eine hinreichende Steifheit gebendem Profil wie das angesprochene U-Profil.

Es wurde schon angesprochen, dass die Tankaufnahme zweckmäßig dafür ausgeführt sein kann, wenigstens einen austauschbaren Treibgastank, vorzugsweise genau einen Treibgastank oder genau zwei Treibgastanks, aufzunehmen. Der wenigstens eine Treibgastank kann mittels wenigstens einer Spanneinrichtung in der Tankaufnahme fixierbar sein. Die Kraftstofftankhalterung kann insbesondere dafür vorgesehen sein, wenigstens einen Kraftstofftank bzw. Treibgastank auf einer oberen Oberfläche eines Gegengewichts eines Gabelstaplers zu haltern. Für solch eine Situation wird vor allem daran gedacht, dass die erste Schwenkachse sich in Vertikalrichtung und die zweite Schwenkachse sich in Horizontalrichtung erstreckt.

Allgemein wird vorgeschlagen, dass die Tankaufnahme in deren zweiten Betriebsstellung durch eine zwischen der Stütze und der Takaufnahme wirksame Fixierung gegen ein Verstellen aus der zweiten Betriebsstellung sicherbar ist, wobei die Fixierung eine blockierbare pneumatische oder hydropneumatische Feder umfassen kann, mit der die Tankaufnahme zumindest in deren zweiten Betriebsstellung gegen ein Verschwenken relativ zur Stütze um die zweite Schwenkachse blockierbar ist.

Indem die Fixierung der Tankaufnahme durch eine blockierbare pneumatische oder hydropneumatische Feder erzielt wird, wird ein mechanisch einfacher und die Zahl von verbauten Komponenten reduzierender Aufbau erreicht. Geeignete blockierbare pneumatische bzw. hydropneumatische Federn sind am Markt kostengünstig verfügbar und machen es entbehrlich, eine mechanische Verriegelung etwa nach der aus der GB 3 262 19 B vorbekannten Art vorzusehen. Auf Basis eine solchen blockierbaren Feder lässt sich eine ergonomisch günstige Bedienbarkeit der Kraftstofftankhalterung einfach erreichen.

Die pneumatische bzw. hydropneumatische Feder kann vorteilhaft mehrere Funktionen erfüllen, ohne dass zusätzliche Komponenten vorgesehen werden müssen. So kann die pneumatische oder hydropneumatische Feder die Tankaufnahme auch in deren zweiten Ladestellung gegen ein Verschwenken relativ zur Stütze um die zweite Schwenkachse blockieren. Ferner kann zweckmäßig vorgesehen sein, dass die pneumatische oder hydropneumatische Feder einen eine Schwenkbewegung der Tankaufnahme aus der zweiten Betriebsstellung in die zweite Ladestellung begrenzenden, die zweite Ladestellung der Tankaufnahme definierenden Anschlag bildet. Eine zusätzliche Abstütz- oder Anschlagvorrichtung ist somit entbehrlich.

Die pneumatische bzw. hydropneumatische Feder ermöglicht auch eine ergonomisch günstige Bedienbarkeit der Kraftstofftankhalterung. Diesbezüglich wird speziell vorgeschlagen, dass die pneumatische oder hydropneumatische Feder durch eine Fernbedienung zwischen einem Blockadezustand, in dem die Tankaufnahme durch die pneumatische oder hydropneumatische Feder gegen ein Schwenken um die zweite Schwenkachse gesichert ist, und einem Freigabezustand, in dem pneumatische oder hydropneumatische Feder ein Schwenken der Tankaufnahme um die zweite Schwenkachse zulässt, umschaltbar ist. Die Fernbedienung kann beispielsweise von einem Bowdenzug mit einem an einer ergonomisch günstigen Stelle angebrachten Bedienhebel oder Bedienknopf gebildet sein.

Betreffend die Fernbedienung wird weiterbildend vorgeschlagen, dass die Fernbedienung an einem von der ersten Schwenkachse ferneren Endabschnitt der Tankaufnahme angeordnet ist, vorzugsweise in enger Nachbarschaft zu einer Handhabe, mit der manuelle Bewegungskräfte zum Schwenken um die erste Schwenkachse. So können beispielsweise auf ergonomische Weise gleichzeitig manuelle Schwenkkräfte auf die Tankaufnahme ausgeübt und die Fernbedienung betätigt werden, vorzugsweise mit einer Hand.

Zur Vermeidung von Fehlbedienungen wird vorgeschlagen, dass die pneumatisch oder hydropneumatische Feder ohne manuelle Betätigung der Fernbedienung den Blockadezustand einnimmt.

Zweckmäßig kann ferner vorgesehen sein, dass die pneumatische oder hydropneumatische Feder dafür ausgeführt ist, eine Schwenkbewegung der

Tankaufnahme relativ zu Stütze um die zweite Schwenkachse zu dämpfen oder/und in Richtung zu der zweiten Betriebsstellung der Tankaufnahme wirkende Schwenkkräfte auf die Tankaufnahme auszuüben. Die pneumatische bzw. hydropneumatische Feder erfüllt dann zugleich eine Funktion wie die herkömmliche Fixierung mit dem federbelasteten Stift und die herkömmliche Dämpfung und Schwenkkraftausübung durch den gasgefüllten Dämpfer der vorbekannten Lösung gemäß GB 2 376 219 B.

Die blockierbare pneumatische oder hydropneumatische Feder kann auf an sich bekannte Weise ausgeführt sein, beispielsweise eine Zylindereinheit und eine bezüglich der Zylindereinheit axial verstellbare Kolbenstange-Kolben-Einheit umfassen, von denen eine mit der Stütze und die andere mit der Tankaufnahme gekoppelt ist und die zumindest in einer der zweiten Betriebsstellung der Tankaufnahme entsprechenden axialen Relativstellung, vorzugsweise zumindest sowohl in einer der zweiten Betriebsstellung der Tankaufnahme entsprechenden axialen Relativstellung als auch in einer der zweiten Ladestellung der Tankaufnahme entsprechenden axialen Relativstellung, gegen relative axiale Verstellung blockierbar sind. Derartige Federn sind in vielfältigen Ausgestaltungen bekannt. Es wird als Beispiel auf die EP 0 381 188 A2 verwiesen.

Die Erfindung stellt auch einen Gabelstapler bereit, der in Zuordnung zu einer oberen Oberfläche eines Gegengewichts eine erfindungsgemäße Kraftstofftankhalterung aufweist, mit der wenigstens ein Kraftstofftak, insbesondere wenigstens ein Treibgastank, auf der oberen Oberfläche des Gegengewichts gehalten werden kann. Es wird in diesem Zusammenhang daran gedacht, dass die Halterungsbasis mit dem Gegengewicht verschraubt ist. Die Halterungsbasis kann zwischen der Oberfläche des Gegengewichts und einer eine freiliegende Oberfläche aufweisenden Abdeckung angeordnet sein.

Die Erfindung wird im Folgenden anhand eines in den Figuren gezeigten Ausführungsbeispiels näher erläutert.
- Fig. 1: zeigt in einer perspektivischen Ansicht das Heck eines Gabelstaplers mit zwei vermittels einer Ausführungsform einer erfindungsgemäßen Kraftstofftankhalterung in einer Betriebsstellung auf einem Gegengewicht des Gabelstaplers gehaltenen Gasflaschen.
- Fig. 2: zeigt die beiden Gasflaschen in einer durch die Kraftstofftankhalterung gehaltenen, ergonomisch günstigen Ladestellung.
- Fig. 3: zeigt die Kraftstofftankhalterung in einer perspektivischen Darstellung in einer der Betriebsstellung der Gasflaschen entsprechenden Stellung mit einer in einer Betriebsstellung (erste Betriebsstellung) angeordneten Stütze und einer in einer Betriebsstellung (zweite Betriebsstellung) angeordneten Tankaufnahme der Kraftstofftankhalterung.
- Fig. 4: zeigt eine weitere perspektivische Ansicht der Kraftstofftankhalterung in einer Stellung entsprechend der Betriebsstellung der Gasflaschen.
- Fig. 5: zeigt eine Draufsicht auf die Kraftstofftankhalterung mit aus der Betriebsstellung in eine Ladestellung (erste Ladestellung) geschwenkter Stütze, aber noch in der Betriebsstellung (zweite Betriebsstellung) gehaltener Tankaufnahme.
- Fig. 6: zeigt die Kraftstofftankhalterung in einer der Ladestellung der Gasflaschen entsprechenden Stellung, mit in der Ladestellung (erste Ladestellung) angeordneter Stütze und in einer Ladestellung (zweite Ladestellung) angeordneter Tankaufnahme.
- Fig. 7: zeigt eine Ansicht der Kraftstofftankhalterung in einer der Betriebsstellung der Treibgasflaschen entsprechenden Stellung auf einen von einer zwischen einer Halterungsbasis und der Stütze wirksamen Schwenkgelenkanordnung fern liegenden Endabschnitt.
- Fig. 8: ist eine perspektivische Darstellung der Kraftstofftankhalterung in einer der Betriebsstellung der Treibgasflaschen entsprechenden Stellung mit Sichtrichtung von schräg unten auf eine Unterseite der Halterungsbasis.
- Fig. 9: ist eine seitliche Explosionsansicht der Kraftstofftankhalterung in einer ersten Sichtrichtung.
- Fig. 10: ist eine seitliche Explosionsansicht der Kraftstofftankhalterung in einer zweiten Sichtrichtung.

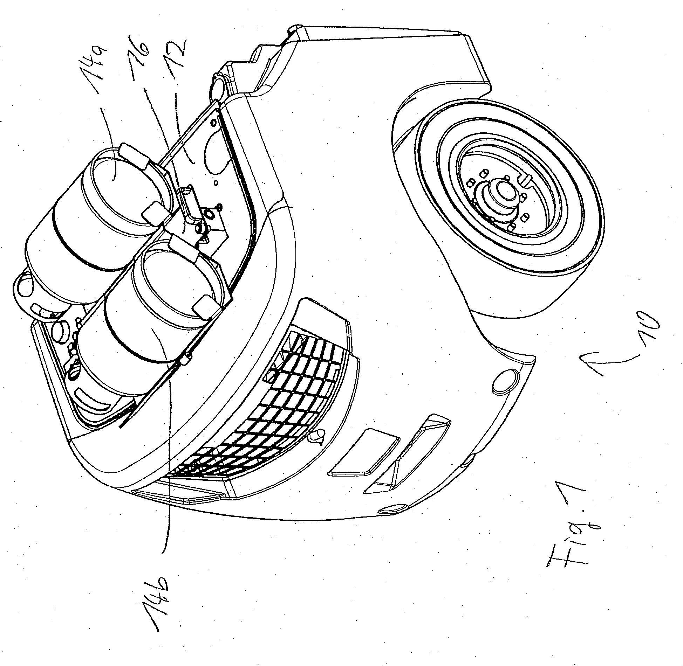

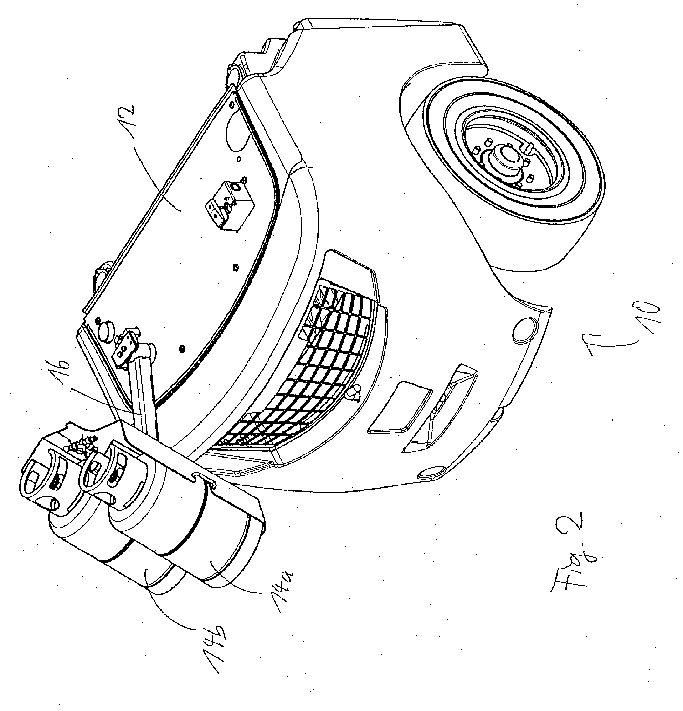

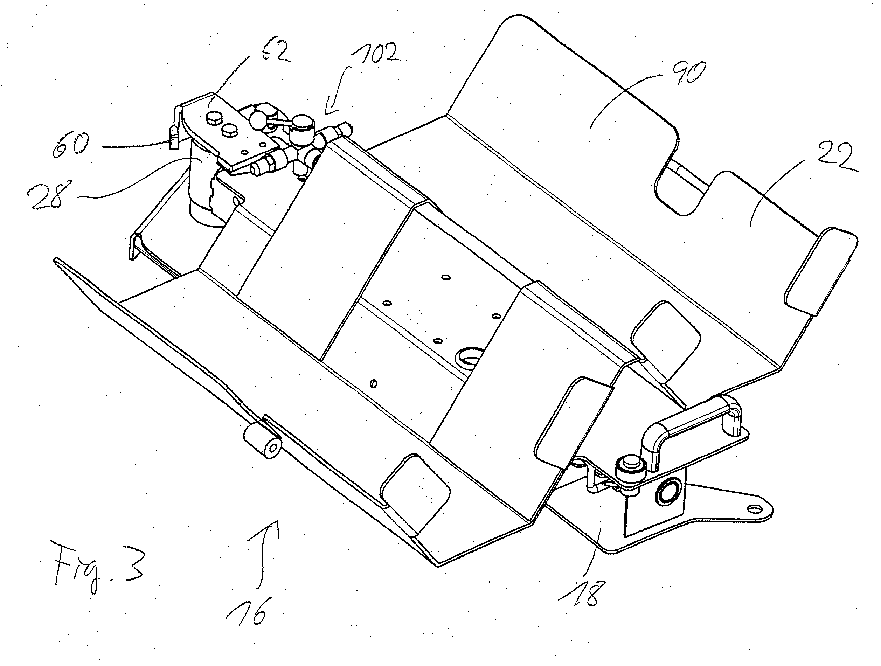

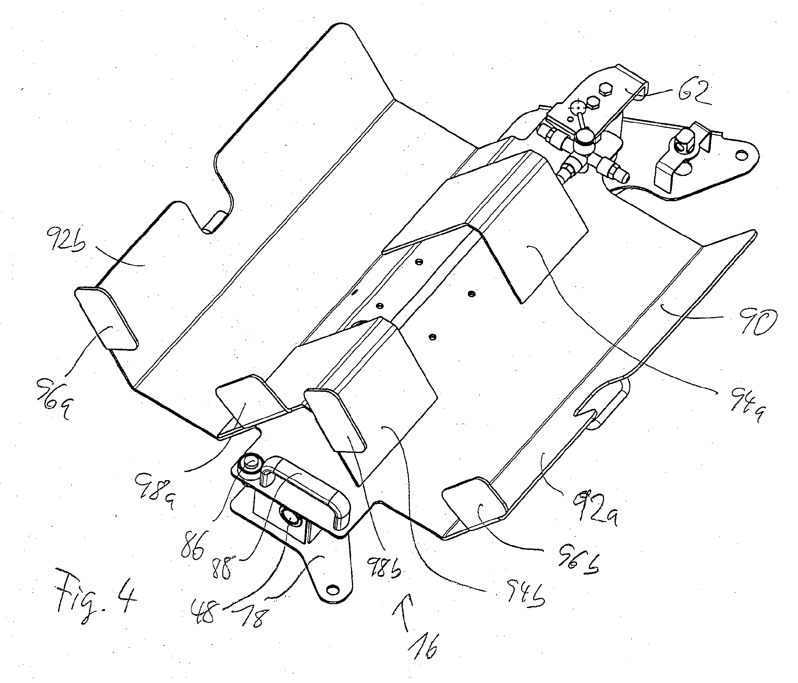

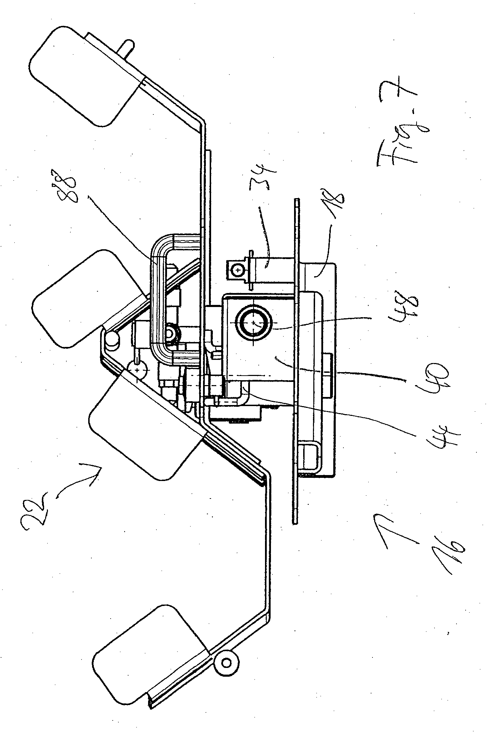

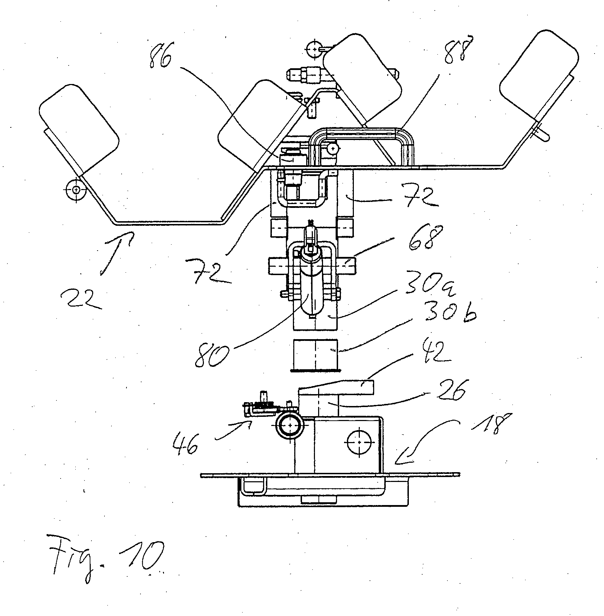

Fig. 1 zeigt das Heck eines mit Treibgas (beispielsweise Propan) betriebenen Gabelstaplers 10. Es sind zwei Treibgasflaschen (insbesondere Propangasflaschen) 14a, 14b mittels einer auch als "Doppelgasflaschenhalter" bezeichenbaren Kraftstofftankhalterung 16 auf der Oberseite eines über der Hinterachse des Gabelstaplers angeordneten Gegengewichts angeordnet und sicher in einer Betriebsstellung gehalten. Ein eine Halterungsbasis 18 der Kraftstofftankhalterung 16 (vgl. Fig. 3 bis 10) abdeckendes Abdeckblech 12 bildet eine bis auf die Gasflaschen und die oberhalb des Abdeckblechs angeordneten Komoponenten der Kraftstofftankhalterung 16 im Wesentlichen freiliegende Oberfläche, oberhalb der die Treibgastanks angeordnet sind. Die Haltungsbasis 16 ist auf der unterhalb des Abdeckblechs 12 befindlichen oberen Oberfläche des Gegengewichts abgestützt und mit dem Gegengewicht verschraubt. Fig. 2 zeigt die beiden Treibgasflaschen 14a, 14b in einer Ladestellung, in der sie mittels der Kraftstofftankhalterung 16 gehalten sind. Die Ladestellung dient insbesondere dafür, leere Treibgasflaschen ergonomisch entfernen und durch volle Treibgasflaschen ersetzen zu können.

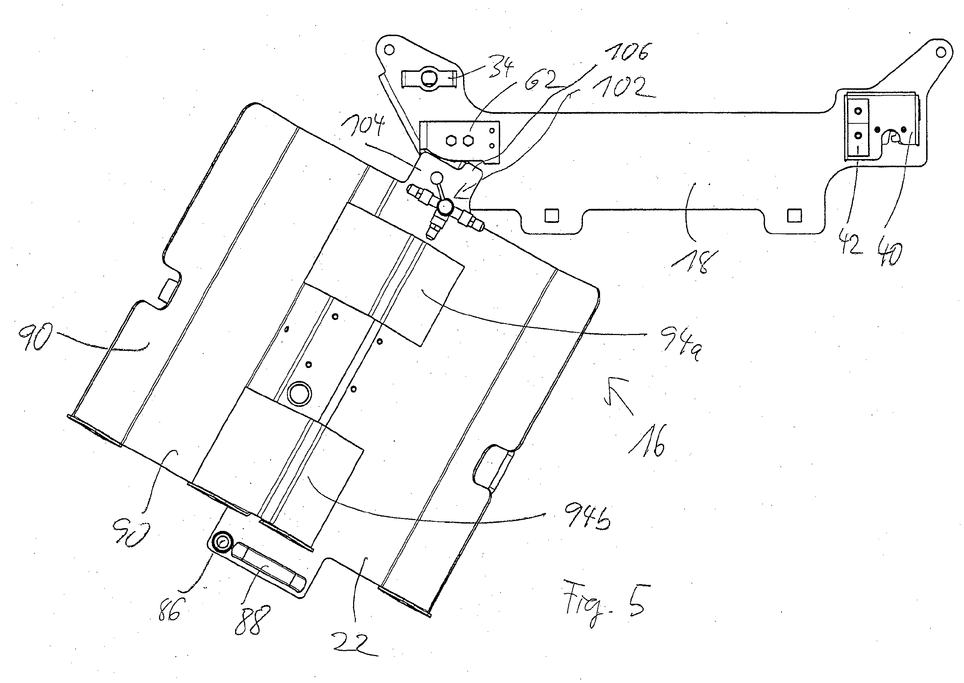

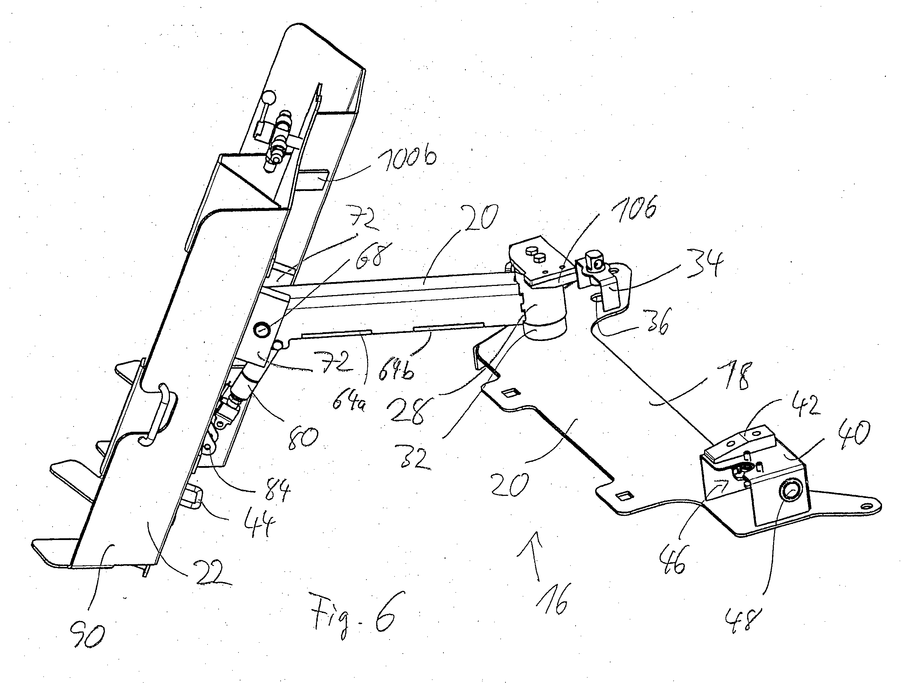

Die Kraftstofftankhalterung 16 ist in den Fig. 3 bis 10 in verschiedenen Ansichten und Darstellungen gezeigt, wobei die Fig. 3, 4, 7 und 8 die Kraftstofftankhalterung in einer der Betriebsstellung gemäß Fig. 1 entsprechenden Stellung zeigen, die Fig. 6 die Kraftstofftankhalterung 16 in einer der Ladestellung der Fig. 2 entsprechenden Stellung zeigt und die Fig. 5 die Kraftstofftankhalterung in einer Zwischenstellung zwischen einer der Betriebsstellung entsprechenden Stellung und einer der Ladestellung entsprechenden Stellung zeigt.

Die Kraftstofftankhalterung 16 des Ausführungsbeispiels umfasst drei relativ zueinander verstellbare Komponenten, nämlich eine Halterungsbasis 18, einen auch als Halterungsarm bezeichenbare Stütze 20 und eine relativ zur Stütze bzw. zum Halterungsarm 20 schwenkbare Tankaufnahme 22, in der gemäß den Fig. 1 und 2 die Treibgastanks 14a und 14b aufgenommen und sicher gehalten sind, beispielsweise mittels in diesen Figuren nicht dargestellter, an sich konventioneller Spannvorrichtungen.

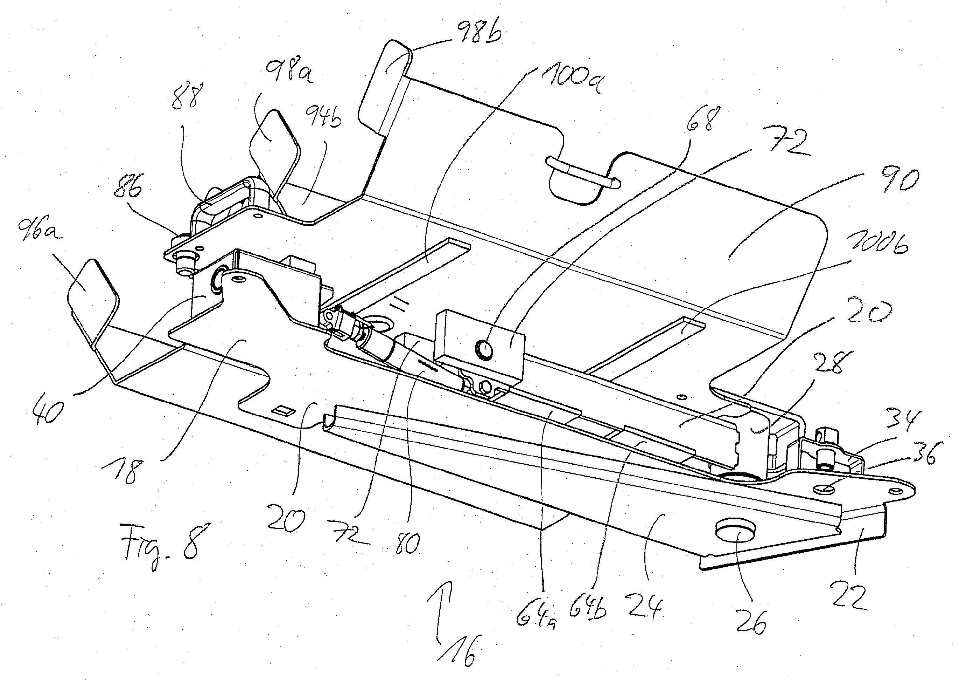

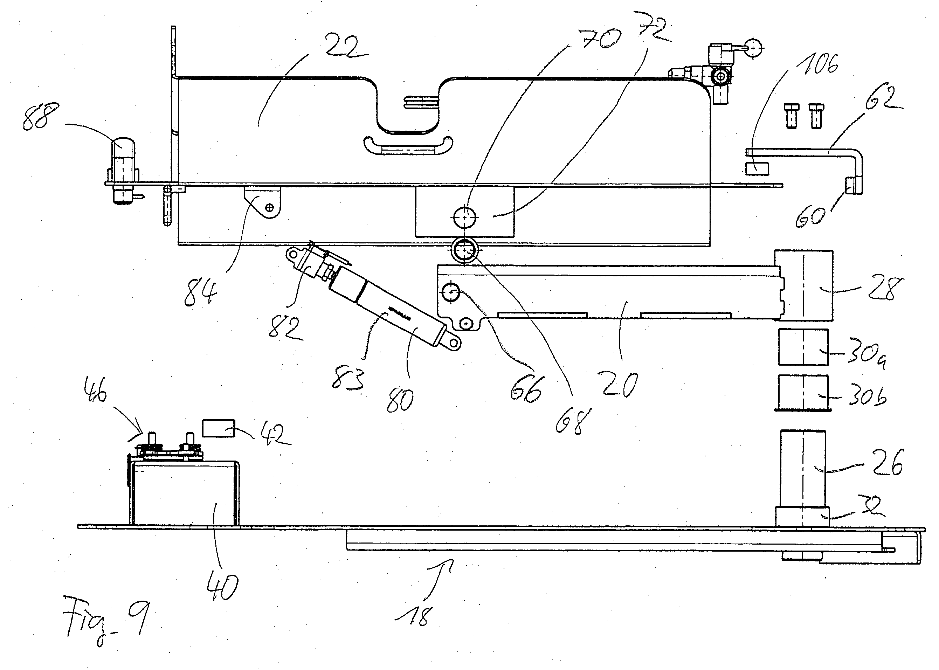

Die Halterungsbasis 18 ist gebildet von einem durch Laserschneiden aus einer Blechtafel herausgeschnittenen Basisblech 20, welches durch Umformen mit einem um 90° umgebogenen Rand 22 ausgeführt ist. Unterhalb des Basisblechs 20 weist die Halterungsbasis 18 ein aussteifendes Profil 24 auf, welches in einem zu einer Längsachse orthogonalen Querschnitt U-förmig ist, dessen Schenkel nach oben in Richtung zur Unterseite des Basisblechs 20 gerichtet sind und in Richtung weg von dem Rand 22 des Basisblechs V-förmig aufeinander zu laufen. Auch das Profil ist aus einer Blechtafel durch Laserschneiden geschnitten und durch Umformen in die in Fig. 8 erkennbare Form gebracht. Zur Halterungsbasis gehört noch ein durch das Basisblech 20 und das aussteifende Profil 24 gehaltener, sich in einer Vertikalrichtung senkrecht zur Oberfläche des Basisblechs 22 erstreckender Lagerbolzen 26, der zusammen mit einer Lagerbuchse 28 des Halterungsarms 20 ein Schwenkgelenk bildet, welches ein Verschwenken des Halterungsarms 20 relativ zur Halterungsbasis 18 um eine Vertikalachse ermöglicht. Die Lagerbuchse 28 ist auf den Lagerbolzen 26 aufgesteckt, wobei zwischen dem Lagerbolzen 26 und der Lagerbuchse 28 zwei Gleitlagerbuchsen 30a und 30b angeordnet sind (vgl. Fig. 9). Der Lagerbolzen 26 ist mit einer auf einer Oberseite des Basisblechs 20 aufliegenden radialen Verdickung 32 ausgeführt, die als Abstandshalter dient, die das untere Ende 28 der Lagerbuchse und damit die Unterseite des Halterungsarms 20 in einem vorgegebenen Abstand oberhalb der Oberseite des Basisblechs 20 hält. Alternativ könnte auch ein von dem Lagerbolzen 26 gesonderter, auf diesen aufgesteckter Abstandsring 32 vorgesehen sein.

Die Gleitlagerbuchse 30b ist mit einem radial vorstehenden Flansch ausgeführt, der zwischen der ringförmigen Oberseite der radialen Verdickung 32 bzw. des Abstandsrings 32 und dem unteren Ende der Lagerhülse 28 angeordnet ist, um die Reibung zwischen diesen Flächen zu reduzieren.

Der Lagerbolzen 26 ist mit seinem unteren Endabschnitt unterhalb der Verdickung 32 bzw. unterhalb des Abstandsrings 32 in Öffnungen des Lagerblechs 20 und des Versteifungsprofils 24 im Presssitz gehalten oder/und verschweißt.

Benachbart zu dem Schwenklager 26, 28 weist die Halterungsbasis 18 eine Halterung 34 für einen Gasschlauchanschluss und eine Durchführung 36 für einen zum Antriebsmotor des Gabelstaplers führenden Gasschlauch auf. In einem von dem Schwenklager 26, 28 entfernten Endbereich ist die Halterungsbasis 18 mit einem auf der Oberseite des Basisblechs 20 angeordneten und befestigten Schlosskasten 40 versehen, auf dessen Oberseite ein bereichsweise keilförmiges Abstützelement 42 vorzugsweise aus reibungsarmem Kunststoff befestigt ist, auf dem die Tankaufnahme 22 in ihrer der Betriebsstellung der Fig. 1 entsprechenden Stellung abgestützt ist. In dieser Stellung ist die Tankaufnahme 22 verriegelbar durch formschlüssigen Eingriff eines Schließbügels 44 an einer Unterseite der Tankaufnahme 22 mit Gegen-Schließelementen eines in dem Schlosskasten 40 angeordneten Schlosses 46. Das Schloss 46 ist mit einem an der Schlossaußenseite zugänglichen Drücker 48 manuell betätigbar, um das Schloss zu entsperren und den Schließeingriff zwischen dem Schließelement 44 und den Schließelementen des Schlosses 46 zu lösen. Es ist bevorzugt ein elektrischer Sensor vorgesehen, der den Zustand des vorliegenden Schließeingriffs bzw. den Zustand des gelösten Schließeingriffs erfasst, so dass eine zusätzliche Sicherheitsfunktion auf Basis eines einer Steuereinheit zugeführten Sensorausgangssignals realisiert sein kann, die beispielsweise verschiedene Funktionen des Gabelstaplers blockiert, so lange der Schließeingriff nicht hergestellt ist.

Der Halterungsarm 20 ist zwischen einer der Betriebsstellung der Treibgasflaschen gemäß Fig. 1 entsprechenden Betriebsstellung und einer der Ladestellung der Treibgasflaschen gemäß Fig. 2 entsprechenden Ladestellung um eine vertikale Schwenkachse verschwenkbar, mittels des von der Lagerbuchse 28 und dem Lagerbolzen 26 gebildeten Schwenklagers. Der Schwenkbereich ist einerseits, in der Betriebsstellung, begrenzt durch den Eingriff des Schließelements 44 der Tankaufnahme 22 in das Schloss 46 des Schlosskastens 40, und andererseits, in der Ladestellung, durch Anschlag des Halterungsarms 20 an einem Anschlag 60 eines nach unten gebogenen Abschnitts eines ansonsten plattenförmigen Anschlagselements 62, welches auf einer oberen Oberfläche des Lagerbolzens 26 gehalten und mit dem Lagerbolzen verschraubt ist.

Der Halterungsarm 20 ist abgesehen von seiner Lagerbuchse 28 als U-Profil ausgeführt, dessen offene Seite nach unten in Richtung zur Halterungsbasis 18 orientiert ist. Zur Versteifung sind Versteifungsbleche 64a und 64b in die korrespondierend ausgeführten Ränder der entgegengesetzten U-Schenkel eingefügt und mit diesen verschweißt. Die Versteifungsbleche 64a, 64b erstrecken sich zwischen den Schenkeln und verbinden diese kraftübertragend miteinander.

An einem von der Lagerbuchse 28 entfernten Ende des Halterungsarms 20 sind in den U-Schenkein Öffnungen 66 ausgeführt, die einen Lagerbolzen 68 aufnehmen, der sich durch Lageröffnungen 70 zweier Lagerblöcke 72 der Tankaufnahme 22 auf beiden Seiten des Halterungsarms 20 erstreckt und so mit den Lagerblöcken ein Schwenklager bildet, welches eine Verschwenkung der Tankaufnahme 22 um eine horizontale Schwenkachse relativ zu dem Halterungsarm 20 ermöglicht. In der Ladestellung des Halterungsarms 20 entsprechend Fig. 2 sowie entsprechend den Fig. 5 und 6 ist die Halterungsaufnahme 22 zwischen einer in Fig. 5 gezeigten horizontalen Betriebsstellung, die abgesehen von der anderen Stellung des Halterungsarms 20 der Betriebsstellung der Treibgasflaschen gemäß Fig. 1 entspricht, und einer in Fig. 6 gezeigten Ladestellung verstellbar. Diese Ladestellung entspricht der Ladestellung der Treibgasflaschen gemäß Fig. 2.

Zwischen dem Halterungsarm 20 und der Halterungsaufnahme 22 ist eine blockierbare pneumatische oder hydropneumatische Feder 80 angeordnet, die im Folgenden kurz als "Gasfeder" angesprochen wird. Die Gasfeder 80 ist mit ihrem einen Zylinder umfassenden Gehäuse 83 einerseits an einem Lagerbolzen angelenkt, der zwischen den Schenkeln des U-Profils des Halterungsarms 20 in Nachbarschaft zum Lagerbolzen 68 gehalten ist, und ist andererseits mit einem an einer Kolbenstange der Gasfeder 80 gehaltenen Gasfederkopf an einem Lagerbolzen angelenkt, welcher zwischen zwei Befestigungslaschen 84 der Tankaufnahme 22 gehalten ist.

Die blockierbare Gasfeder 80 erfüllt mehrere Funktionen. So sichert die Gasfeder 80 die Tankaufnahme 22 in einer momentanen Position relativ zu dem Halterungsarm 20. Es handelt sich insbesondere um die Betriebsstellung der Tankaufnahme 22, die beim Schwenken des Halterungsarms 20 aus der Betriebsstellung in die Ladestellung erhalten bleiben muss, da nur in der Ladestellung des Halterungsarms 20 eine Verschwenkung der Tankaufnahme 22 aus der Betriebsstellung in die Ladestellung erfolgen soll. Die Gasfeder 80 stützt bei dieser Verschwenkung die Tankaufnahme 22 gegen ein Verschwenken unter wirksamen Gewichtskräften der Gastanks 14a, 14b ab und sichert die Tankaufnahme 22 in dieser Stellung. In der Ladestellung des Schwenkarms 20 kann dann eine Bedienperson durch Betätigung einer Fernbedienung die Gasfeder 80 entsperren und so das Verschwenken der Tankaufnahme 22 aus der horizontalen Betriebsstellung in die schräge Ladestellung freigeben. Die Fernbedienung ist von einem Drücker 86 gebildet, welcher über einen Bowdenzug mit einem Betätigungselement im Gasfederkopf 82 verbunden ist und in enger Nachbarschaft zu einem Handgriff 88 an einem von der Schwenkgelenkanordnung 26, 28 entfernten Ende der Tankaufnahme 22 an dieser angeordnet ist.

Ein Verschwenken der Tankaufnahme 22 relativ zu Halterungsarm 20 ist nur möglich, so lange der Drücker 86 betätigt wird. Hat die Tankaufnahme 22 die Ladestellung entsprechend Fig. 6 und Fig. 2 erreicht, lässt die Bedienperson den Drücker 86 los. Die Gasfeder 80 sichert dann mangels weiterer Betätigung des Drückers 86 durch die Bedienperson die Halterungsaufnahme 22 in dieser Ladestellung, so dass die leeren Gasflaschen 14a, 14b durch die Bedienperson leicht entfernt werden können (Fig. 2) und volle Ersatz-Gasflaschen 14a, 14b wieder in die Tankaufnahme 22 aufgenommen werden können. Hiernach kann die Tankaufnahme 22 mit den vollen Treibgasflaschen wieder zurück in die Betriebsstellung relativ zum Halterungsarm 20 geschwenkt werden, unter Betätigung der Gasfederfernbedienung, genauer des Drückers 86. Das Rückschwenken der beladenen Tankaufnahme 22 in die Ladestellung wird durch die entsprechenden Schwenkkräfte auf die Tankaufnahme 22 ausübende Gasfeder 80 unterstützt.

Zu erwähnen ist noch, dass die Gasfeder 80 noch weitere wichtige Funktionen erfüllen kann. So kann die Ladestellung der Tankaufnahme gemäß Fig. 6 und Fig. 2 einer maximal in das Zylindergehäuse 83 der Gasfeder 80 eingeschobenen Stellung der Kolbenstange entsprechen, so dass die Gasfeder 80 einen den Schwenkbereich begrenzenden und die Ladestellung der Tankaufnahme 22 definierenden Schwenkanschlag bildet. Ferner kann die Gasfeder als Dämpfer dienen, um die Schwenkbewegung der Tankaufnahme 22 zu dämpfen, also zu bremsen.

Hat die Halterungsaufnahme 22 wieder die Betriebsstellung relativ zur Stütze 20 entsprechend Fig. 5 erreicht, lässt die Bedienperson die Gasfederfernbedienung los, so dass die Tankaufnahme 22 nun in dieser Betriebsstellung durch die Gasfeder 80 gesichert ist. Es kann dann die Rückschwenkung der in der Horizontalstellung angeordneten Tankaufnahme 22 mit dem Halterungsarm 22 aus der Ladestellung des Halterungsarms in die Betriebsstellung des Halterungsarms erfolgen, durch Ausübung entsprechender Schwenkkräfte auf die Halterungsaufnahme insbesondere am Handgriff 88. In der Betriebsstellung des Halterungsarms 20 greift dann der Schließbügel 44 an der Unterseite der Tankaufnahme in das Schloss 46 ein und das Schloss sichert den Halterungsarm 20 und damit die Tankaufnahme 22 in der Betriebsstellung gemäß Fig. 1. In dieser Betriebsstellung ist die Tankaufnahme 22 nicht nur durch das Schwenklager 68, 72 und durch die Gasfeder 80 am Halterungsarm 20 und damit über das Schwenklager 26, 28 mittelbar an der Halterungsbasis 18 abgestützt, sondern auch durch den Schlosskasten 40 und das Abstützelement 42 an der Halterungsbasis 18.

Die Tankaufnahme 22 ist ebenso wie die Halterungsbasis 18 mit dem Basisblech 20 und dem Profil 24 und wie das U-Profil des Halterungsarms 20 bevorzugt aus geeignetem Blechmaterial hergestellt, vorzugsweise aus Blechtafelmaterial durch Laserschneiden herausgeschnitten und geeignet umgeformt, wie in den Figuren zu erkennen. Die Tankaufnahme 22 umfasst ein Aufnahmeblech 90, welches entlang mehrerer sich in der Betriebsstellung der Tankaufnahme 22 parallel zum Halterungsarm 22 erstreckenden Biegelinien umgebogen ist, um eine erste Gasflaschenbegrenzung 92a und eine zweite Gasflaschenbegrenzung 92b zu bilden, an denen die Gasflasche 14a bzw. die Gasflasche 14b mit ihrem Außenumfang anliegt. In einem mittleren Bereich sind auf dem Aufnahmeblech 90 zwei Zwischenbegrenzungsbleche 94a und 94b befestigt, an denen die beiden Gasflaschen ebenfalls mit ihrem jeweiligen Umfang anliegen und so in einer vorbestimmten Position angeordnet und gehalten sind. Das Aufnahmeblech 90 ist ferner mit umgebogenen Blechabschnitten ausgefüllt, die als untere Begrenzungen 96a und 96b für die Gasflaschen dienen, an denen die Gasflaschen mit ihrem Gasflaschenfuß anliegen. In entsprechender Weise ist das Begrenzungsblech 94b mit derartigen Begrenzungsabschnitten 98a und 98b ausgeführt.

Zur Versteifung sind an der Unterseite des Aufnahmeblechs 90 Versteifungselemente 100a und 100b vorgesehen, die zweckmäßig als streifenförmige und entsprechend dem Aufnahmeblech 90 gebogene Blechprofile 100a und 100b ausgeführt sein können. An einem oberen, dem Schwenkgelenk 26, 28 nahen Endbereich trägt das Aufnahmeblech 90 eine Anschluss- und Ventilanordnung 102, umfassend einen ersten Gasschlauchanschluss zum Anschließen eines an der Treibgasflasche 14a angeschlossenen Gasschlauchs, einen zweiten Gasschlauchanschluss zum Anschließen eines an der Treibgasflasche 14b angeschlossenen Gasschlauches und einen dritten Gasschlauchanschluss zum Anschließen eines Gasschlauches, welcher dazu dient, dass einer der Treibgasflaschen entnommene Treibgas über einen Anschluss am Element 34 und durch die Durchführung 36 dem Motor des Gabelstaplers zuzuführen. Ein Umschaltventil der Anschluss- und Ventilanordnung 102 dient dazu, den Gaszufluss zu sperren bzw. eine von den beiden Treibgasflaschen für die Treibgasentnahme auszuwählen.

Für eine hohe Funktionssicherheit und Sicherheit gegen eine Fehlbedienung ist die Halterungsbasis 18 bevorzugt mit einer Sicherungsmechanik ausgeführt, die das Verschwenken der Tankaufnahme 22 aus der horizontalen Betriebsstellung in Richtung zur schrägen Ladestellung nur dann freigibt, wenn der Halterungsarm 20 in die Ladestellung geschwenkt ist. Hierzu weist das Aufnahmeblech 90 benachbart zu der Anschluss- und Ventilanordnung 102 einteilig eine vorstehende Anschlagzunge 104 auf, welche das Anschlagselement 62 in allen Schwenkstellungen des Halterungsarms 20 ausgenommen der Ladestellung des Halterungsarms 20 untergreift, so dass eine Schwenkbewegung der Tankaufnahme 22 aus der Betriebsstellung in Richtung zur Ladestellung nur in der Ladestellung des Halterungsarms 20 möglich ist. Die Anschlagzunge 104 bzw. ein besonders weit vorstehender Zungenabschnitt 106 greifen nicht direkt an der Unterseite des Anschlagelements 62 an, sondern an einem an der Unterseite des Anschlagselements befestigten, bereichsweise keilförmig ausgeführten Kontaktelement 106 aus reibungsarmem Kunststoff. Das Kontaktelement 106 dient dafür, in der Betriebsstellung entsprechend Fig. 2 Druckkräfte auf die Anschlagzunge 104 auszuüben, um die Tankaufnahme 22 und damit auch den Halterungsarm 20 in der Betriebsstellung unter einer gewissen Spannung zu halten, so dass Klappergeräusche im Betrieb des Gabelstaplers vermieden werden. Die teilweise keilförmige Ausgestaltung des Kontaktelements 106 dient dazu, beim Zurückschwenken des Halterungsarms mit in der Betriebsstellung angeordneter Tankaufnahme in die Betriebsstellung des Halterungsarms 20 diesen die Spannung erzeugenden Eingriff leicht herzustellen.

## Patentansprüche

1. Kraftstofftankhalterung zur Halterung wenigstens eines Kraftstofftanks (14a, 14b) auf oder an einer Oberfläche eines gewerblichen Fahrzeugs (10), insbesondere eines Flurförderzeugs oder Gabelstaplers (10), umfassend:
- eine der Oberfläche zugeordnete stationäre Halterungsbasis (18), über die Gewichtskräfte und Trägheitskräfte des Kraftstofftanks an der Oberfläche oder einer Karosserie des Fahrzeugs abstützbar sind;
- eine mittels einer ersten Schwenkgelenkanordnung (26, 28) relativ zur Halterungsbasis (18) schwenkbare Stütze (20), die zwischen einer ersten Betriebsstellung und einer ersten Ladestellung um eine sich mit einem Winkel zur Oberfläche erstreckende erste Schwenkachse relativ zur Halterungsbasis (18) schwenkbar ist und über die zumindest in der ersten Ladestellung Gewichtskräfte des Kraftstofftanks an der Halterungsbasis (18) und damit an der Oberfläche bzw. der Karosserie abstützbar sind; und
- eine zumindest in der ersten Ladestellung der Stütze (20) mittels einer zweiten Schwenkgelenkanordnung relativ zur Stütze schwenkbare Tankaufnahme (22), die dafür ausgeführt ist, den wenigstens einen Kraftstofftank aufzunehmen und zu halten, und die zwischen einer zweiten Betriebsstellung und einer zweiten Ladestellung um eine sich mit einem Winkel zur ersten Schwenkachse erstreckende zweite Schwenkachse schwenkbar ist und über die zumindest in der ersten Ladestellung der Stütze (20) Gewichtskräfte des Kraftstofftanks an der Stütze (20) und damit an der Halterungsbasis (18) abstützbar sind;
wobei die Tankaufnahme in deren zweiten Betriebsstellung durch eine Sicherungsmechanik (62, 104) gegen ein Verstellen aus der zweiten Betriebsstellung sicherbar ist;
**dadurch gekennzeichnet, dass** die Sicherungsmechanik (62, 104) dafür ausgeführt ist, auf eine Schwenkbewegung der Stütze (20) aus der ersten Betriebsstellung in die erste Ladestellung anzusprechen und das Verschwenken der Tankaufnahme (22) um die zweite Schwenkachse aus der zweiten Betriebsstellung in die zweite Ladestellung freizugeben, wenn die Stütze (20) die erste Ladestellung erreicht hat.

2. Kraftstofftankhalterung nach Anspruch 1, **dadurch gekennzeichnet, dass** die Sicherungsmechanik (62, 104) einen mit der Tankaufnahme (22) bewegungsverkoppelten, gegebenenfalls stationär an der Tankaufnahme angeordneten oder dieser zugehörigen Anschlag (104) und einen direkt oder indirekt an der Halterungsbasis gehaltenen stationären Gegen-Anschlag (62) umfasst, derart, dass ein gegenseitiger Eingriff zwischen dem Anschlag (104) und dem Gegen-Anschlag (62) in der ersten Betriebsstellung und vor Erreichen der ersten Ladestellung ein Verschwenken der Tankaufnahme um die zweite Schwenkachse aus der zweiten Betriebsstellung in Richtung zur zweiten Ladestellung blockiert und dass eine aus der Schwenkbewegung um die erste Schwenkachse resultierende relative Verstellung zwischen dem Anschlag (104) und dem Gegen-Anschlag (62) diese in eine in der ersten Ladestellung eingenommene relative Freigabestellung überführt, in der der Anschlag (104) und der Gegenanschlag (62) nicht eingreifen und die Verschwenkung der Tankaufnahme (22) aus der zweiten Betriebsstellung in die zweite Ladestellung freigeben.

3. Kraftstofftankhalterung nach Anspruch 2, **dadurch gekennzeichnet, dass** der Gegen-Anschlag (62) ein auf einem der ersten Schwenkgelenkanordnung zugehörigen Lagerbolzen (26) der Halterungsbasis (18) gehaltenes, vorzugsweise plattenförmiges Anschlagselement (62) umfasst, welches an einer mit dem Anschlag (106) wechselwirkenden Seite vorzugsweise mit Gleitmaterial ausgeführt ist.

4. Kraftstofftankhalterung nach Anspruch 2 oder 3, **dadurch gekennzeichnet, dass** der Anschlag (104) von einer vorstehenden Zunge (104) einer Halterungsplatte (90) der Tankaufnahme (22) gebildet ist.

5. Kraftstofftankhalterung nach einem der Ansprüche 1 bis 4, **dadurch gekennzeichnet, dass** die Tankaufnahme (22) in ihrer zweiten Betriebsstellung bei in der ersten Betriebsstellung angeordneter Stütze (20) an einem Auflager (40, 42) der Halterungsbasis (18) abstützbar ist, oder/und **dadurch gekennzeichnet, dass** die Tankaufnahme (22) mittels einer formschlüssigen Schließeinrichtung (44, 46) in der zweiten Betriebsstellung bei in der ersten Betriebsstellung angeordneter Stütze (20) an der Halterungsbasis (18) sicherbar ist.

6. Kraftstofftankhalterung nach Anspruch 5, **dadurch gekennzeichnet, dass** die Schließeinrichtung ein an der Halterungsbasis gehaltenes Schloss (46) umfasst, welches mit einem Schließelement (44) der Halterungsbasis (18) in Schließeingriff bringbar ist, wobei das Schloss elektrisch oder mechanisch betätigbar ist, den Schließeingriff zu lösen, oder/und wobei das Schloss (46) einen elektrischen Schließsensor aufweist, der auf den Zustand des Vorliegens des Schließeingriffs und den Zustand des gelösten Schließangriffs anspricht und ein entsprechendes Zustandssignal an eine zugeordnete Steuereinrichtung abgibt.

7. Kraftstofftankhalterung nach einem der vorhergehenden Ansprüche, **dadurch gekennzeichnet, dass** die Stütze (20) als U-Profil-Arm ausgeführt ist, wobei vorzugsweise die pneumatische oder hydropneumatische Feder (80) oder/und wenigstens eine abstützende Schwenkkräfte in Richtung zur zweiten Betriebsstellung auf die Tankaufnahme ausübende Feder an einer sich zwischen zwei einander entgegengesetzten U-Profil-Schenkeln des U-Profil-Arms gehaltenen Anlenkung angelenkt ist.

8. Kraftstofftankhalterung nach einem der vorhergehenden Ansprüche, **dadurch gekennzeichnet, dass** die Halterungsbasis (18) versteift ausgeführt ist, vorzugsweise mit einem eine Halterungsbasisplatte (20) versteifendem, an deren Unterseite angeordneten und zusammen mit der Halterungsbasisplatte ein Gelenkelement (26) der ersten Schwenkgelenkanordnung abstützenden Aussteifungsprofil (24), welches bevorzugt als U-Profil, höchstbevorzugt als in Richtung weg von der ersten Schwenkgelenkanordnung V-förmig sich verjüngendes U-Profil ausgeführt ist.

9. Kraftstofftankhalterung nach einem der vorhergehenden Ansprüche, **dadurch gekennzeichnet, dass** die Tankaufnahme in deren zweiten Betriebsstellung durch eine zwischen der Stütze (20) und der Tankaufnahme (22) wirksame Fixierung (80) gegen ein Verstellen aus der zweiten Betriebsstellung sicherbar ist, wobei
die Fixierung eine blockierbare pneumatische oder hydropneumatische Feder (80) umfasst, mit der die Tankaufnahme (22) zumindest in deren zweiten Betriebsstellung gegen ein Verschwenken relativ zur Stütze (20) um die zweite Schwenkachse blockierbar ist.

10. Kraftstofftankhalterung nach Anspruch 9, **dadurch gekennzeichnet, dass** mit der pneumatische oder hydropneumatische Feder (80) die Tankaüfnahme (22) auch in deren zweiten Ladestellung gegen ein Verschwenken relativ zur Stütze um die zweite Schwenkachse blockierbar ist.

11. Kraftstoffhalterung nach Anspruch 9 oder 10, **dadurch gekennzeichnet, dass** die pneumatische oder hydropneumatische Feder (80) einen eine Schwenkbewegung der Tankaufnahme (22) aus der zweiten Betriebsstellung in die zweite Ladestellung begrenzenden, die zweite Ladestellung der Tankaufnahme (22) definierenden Anschlag bildet.

12. Kraftstofftankhalterung nach einem der Ansprüche 9 bis 11, **dadurch gekennzeichnet, dass** die pneumatische oder hydropneumatische Feder (80) durch eine Fernbedienung (86) zwischen einem Blockadezustand, in dem die Tankaufnahme (22) durch die pneumatische oder hydropneumatische Feder (80) gegen ein Schwenken um die zweite Schwenkachse gesichert ist, und einem Freigabezustand, in dem pneumatische oder hydropneumatische Feder (80) ein Schwenken der Tankaufnahme um die zweite Schwenkachse zulässt, umschaltbar ist.

13. Kraftstofftankhalterung nach Anspruch 12, **dadurch gekennzeichnet, dass** die Fernbedienung (86) an einem von der ersten Schwenkachse ferneren Endabschnitt der Tankaufnahme (22) angeordnet ist, vorzugsweise in enger Nachbarschaft zu einer Handhabe (88), mit der manuelle Bewegungskräfte zum Schwenken um die erste Schwenkachse oder/und um die zweite Schwenkachse auf die Tankaufnahme (22) ausübbar sind, oder/und **dadurch gekennzeichnet, dass** die pneumatische oder hydropneumatische Feder (80) ohne manuelle Betätigung der Fernbedienung (86) den Blockadezustand einnimmt.

14. Kraftstofftankhalterung nach einem der Ansprüche 9 bis 13, **dadurch gekennzeichnet, dass** die pneumatische oder hydropneumatische Feder (86) dafür ausgeführt ist, eine Schwenkbewegung der Tankaufnahme (22) relativ zu Stütze um die zweite Schwenkachse zu dämpfen oder/und in Richtung zu der zweiten Betriebsstellung der Tankaufnahme (22) wirkende Schwenkkräfte auf die Tankaufnahme auszuüben.

15. Gabelstapler, welcher in Zuordnung zu einer oberen Oberfläche eines Gegengewichts eine Kraftstofftankhalterung (16) nach einem der vorhergehenden Ansprüche aufweist, mit der wenigstens ein Kraftstofftank (14a, 14b) auf der oberen Oberfläche des Gegengewichts gehalten werden kann, vorzugsweise **dadurch gekennzeichnet, dass** die Halterungsbasis (18) mit dem Gegengewicht verschraubt ist oder/und dass die Halterungsbasis (18) zwischen der Oberfläche des Gegengewichts und einer eine freiliegende Oberfläche aufweisenden Abdeckung (12) angeordnet ist.

## Claims

1. A fuel tank holder for holding at least one fuel tank (14a, 14b) on or at a surface of a commercial vehicle (10), in particular of an industrial truck or forklift truck (10), comprising:
- a stationary holder base (18) associated with the surface, via which weight forces and inertial forces of the fuel tank can be supported on the surface or a body of the vehicle;
- a support (20) swivellable relative to the holder base (18) by means of a first swivel joint arrangement (26, 28), which support (20) is swivellable relative to the holder base (18) between a first operating position and a first loading position about a first swivel axis extending at an angle to the surface and via which at least in the first loading position weight forces of the fuel tank can be supported on the holder base (18) and thus on the surface or the body; and
- a tank receptacle (22) swivellable at least in the first loading position of the support (20) by means of a second swivel joint arrangement relative to the support, which tank receptacle is embodied to receive and hold at least one fuel tank, and which is swivellable between a second operating position and a second loading position about a second swivel axis extending at an angle to the first swivel axis and via which at least in the first loading position of the support (20) weight forces of the fuel tank can be supported on the support (20) and thus on the holder base (18);
the tank receptacle being securable in the second operating position thereof by a securing mechanism (62, 104) against shifting out of the second operating position;
**characterised in that** the securing mechanism (62, 104) is embodied to respond to a swivelling movement of the support (20) out of the first operating position into the first loading position and to allow swivelling of the tank receptacle (22) about the second swivel axis out of the second operating position into the second loading position when the support (20) has reached the first loading position.

2. A fuel tank holder according to claim 1, **characterised in that** the securing mechanism (62, 104) comprises a limit stop (104) coupled for movement with the tank receptacle (22) and optionally arranged stationarily on the tank receptacle or associated therewith and a stationary counter-limit stop (62) held directly or indirectly on the holder base, such that mutual engagement between the limit stop (104) and the counter-limit stop (62) in the first operating position and before the first loading position is reached blocks swivelling of the tank receptacle about the second swivel axis out of the second operating position towards the second loading position and **in that** a relative shift between the limit stop (104) and the counter-limit stop (62) resulting from the swivel movement about the first swivel axis moves said tank receptacle into a relative release position adopted in the first loading position, in which release position the limit stop (104) and counter-limit stop (62) do not engage and allow swivelling of the tank receptacle (22) out the second operating position into the second loading position.

3. A fuel tank holder according to claim 2, **characterised in that** the counter-limit stop (62) comprises a preferably plate-shaped limit stop element (62) held on a bearing bolt (26) of the holder base (18) associated with the first swivel joint arrangement, which limit stop element (62) is embodied preferably with sliding material on a side interacting with the limit stop (106).

4. A fuel tank holder according to claim 2 or claim 3, **characterised in that** the limit stop (104) is formed by a protruding tongue (104) of a holder plate (90) of the tank receptacle (22).

5. A fuel tank holder according to any one of claims 1 to 4, **characterised in that**, when the support (20) is arranged in the first operating position, the tank receptacle (22) can be supported in its second operating position on a bracket (40, 42) of the holder base (18), and/or **characterised in that**, when the support (20) is arranged in the first operating position, the tank receptacle (22) may be secured on the holder base (18) in the second operating position by means of a form-fitting closing means (44, 46).

6. A fuel tank holder according to claim 5, **characterised in that** the closing means comprises a lock (46) held on the holder base, which lock may be brought into closing engagement with a closing element (44) of the holder base (18), wherein the lock can be actuated electrically or mechanically to release the closing engagement, and/or wherein the lock (46) comprises an electrical closure sensor, which responds to the state of the presence of the closing engagement and to the state of the released closing engagement and outputs a corresponding state signal to an assigned control device.

7. A fuel tank holder according to any one of the preceding claims, **characterised in that** the support (20) takes the form of a U-profile arm, wherein preferably the pneumatic or hydropneumatic spring (80) and/or at least one spring exerting supporting swivel forces in the direction of the second operating position on the tank receptacle is coupled to a link held between two mutually opposing U-profile legs of the U-profile arm.

8. A fuel tank holder according to any one of the preceding claims, **characterised in that** the holder base (18) is reinforced, preferably with a reinforcing profile (24) which reinforces a holder base plate (20), is arranged on the underside thereof and together with the holder base plate supports a joint element (26) of the first swivel joint arrangement, which reinforcing profile preferably takes the form of a U-profile, most preferably of a U-profile tapering in a V away from the first swivel joint arrangement.

9. A fuel tank holder according to any one of the preceding claims,
**characterised in that** the tank receptacle may be secured in the second operating position thereof against shifting out of the second operating position by a fixation means (80) active between the support (20) and the tank receptacle (22), wherein the fixation means comprises a blockable pneumatic or hydropneumatic spring (80) with which the tank receptacle (22) can be blocked at least in the second operating position thereof against swivelling relative to the support (20) about the second swivel axis.

10. A fuel tank holder according to claim 9, **characterised in that** with the pneumatic or hydropneumatic spring (80) the tank receptacle (22) can also be blocked in the second loading position thereof against swivelling relative to the support about the second swivel axis.

11. A fuel tank holder according to claim 9 or claim 10, **characterised in that** the pneumatic or hydropneumatic spring (80) forms a limit stop restricting a swivelling movement of the tank receptacle (22) out of the second operating position into the second loading position and defining the second loading position of the tank receptacle (22).

12. A fuel tank holder according to any one of claims 9 to 11, **characterised in that** the pneumatic or hydropneumatic spring (80) can be switched over by a remote control (86) between a blocking state, in which the tank receptacle (22) is secured by the pneumatic or hydropneumatic spring (80) against swivelling about the second swivel axis, and a release state, in which the pneumatic or hydropneumatic spring (80) allows swivelling of the tank receptacle about the second swivel axis.

13. A fuel tank holder according to claim 12, **characterised in that** the remote control (86) is arranged on an end portion of the tank receptacle (22) more remote from the first swivel axis, preferably close to a handle (88), with which manual movement forces may be exerted on the tank receptacle (22) for swivelling about the first swivel axis and/or about the second swivel axis, and/or **characterised in that** the pneumatic or hydropneumatic spring (80) assumes the blocking state without manual actuation of the remote control (86).

14. A fuel tank holder according to any one of claims 9 to 13, **characterised in that** the pneumatic or hydropneumatic spring (86) is embodied to damp a swivelling movement of the tank receptacle (22) relative to the support about the second swivel axis, and/or to exert swivelling forces acting in the direction of the second operating position of the tank receptacle (22) on the tank receptacle.

15. A forklift truck, which in association with an upper surface of a counterweight comprises a fuel tank holder (16) according to any one of the preceding claims, with which at least one fuel tank (14a, 14b) may be held on the upper surface of the counterweight, preferably **characterised in that** the holder base (18) is screwed together with the counterweight and/or that the holder base (18) is arranged between the surface of the counterweight and a cover (12) comprising an exposed surface.

## Revendications

1. Fixation de réservoir de carburant pour la fixation d'au moins un réservoir de carburant (14a, 14b) sur ou à une surface d'un véhicule industriel (10), en particulier d'un chariot de manutention ou d'un chariot élévateur à fourche (10), comprenant:
- une base de fixation stationnaire (18) associée à la surface, par laquelle des forces pondérales et des forces d'inertie du réservoir de carburant peuvent être appuyées à la surface ou à une carrosserie du véhicule;
- un appui (20) pouvant pivoter par rapport à la base de fixation (18) au moyen d'un premier dispositif - d'articulation pivotante (26, 28), qui peut pivoter par rapport à la base de fixation (18) entre une première position de fonctionnement et une première position de chargement autour d'un premier axe de pivotement s'étendant avec un certain angle par rapport à la surface et par lequel, au moins dans la première position de chargement, des forces pondérales du réservoir de carburant peuvent être appuyées sur la base de fixation (18) et dès lors sur la surface ou la carrosserie; et
- un logement de réservoir (22) pouvant pivoter par rapport à l'appui, au moins dans la première position de chargement de l'appui (20), au moyen d'un deuxième dispositif d'articulation pivotante, qui est conçu de façon à recevoir et à attacher au moins un réservoir de carburant, et qui peut pivoter entre une deuxième position de fonctionnement et une deuxième position de chargement autour d'un deuxième, axe de pivotement s'étendant avec un certain angle par rapport au premier axe de pivotement et par lequel, au moins dans la première position de chargement de l'appui (20), des forces pondérales du réservoir de carburant peuvent être appuyées sur l'appui (20) et dès lors sur la base de fixation (18) ;
dans lequel le logement de réservoir peut être fixé, dans sa deuxième position de fonctionnement, par un mécanisme de fixation (62, 104) contre un déplacement hors de la deuxième position de fonctionnement;
**caractérisée en ce que** le mécanisme de fixation (62, 104) est conçu de façon à réagir à un mouvement de pivotement de l'appui (20) de la première position de fonctionnement à la première position de chargement et à libérer le pivotement du logement de réservoir (22) autour du deuxième axe de pivotement de la deuxième position de fonctionnement à la deuxième position de chargement, lorsque l'appui (20) a atteint la première position de chargement.

2. Fixation de réservoir de carburant selon la revendication 1, **caractérisée en ce que** le mécanisme de fixation (62, 104) comprend une butée (104) solidaire du mouvement du logement de réservoir (22), le cas échéant disposée de façon stationnaire sur le logement de réservoir ou faisant partie de celui-ci et une contre-butée stationnaire (62) attachée directement ou indirectement à la base de fixation, de telle manière qu'un engagement mutuel entre la butée (104) et la contre-butée (62) dans la première position de fonctionnement et avant d'atteindre la première position de chargement bloque un pivotement du logement de réservoir autour du deuxième axe de pivotement de la deuxième position de fonctionnement en direction de la deuxième position de chargement et qu'un déplacement relatif entre la butée (104) et la contre-butée (62), résultant du mouvement de pivotement autour du premier axe de pivotement, transfère celles-ci dans une position de libération relative occupée dans la première position de chargement et dans laquelle la butée (104) et la contre-butée (62) ne sont pas engagées et libèrent le pivotement du logement de réservoir (22) de la deuxième position de fonctionnement à la deuxième position de chargement.

3. Fixation de réservoir de carburant selon la revendication 2, **caractérisée en ce que** la contre-butée (62) comprend un élément de butée (62), de préférence en forme de plaque, attaché sur un axe de palier (26) de la base de fixation (18) faisant partie du premier dispositif d'articulation pivotante, qui est réalisé de préférence avec un matériau anti-grippant sur une face interférant avec la butée (104).

4. Fixation de réservoir de carburant selon la revendication 2 ou 3, **caractérisée en ce que** la butée (104) est formée par une patte saillante (104) d'une plaque de fixation (90) du logement de réservoir (22).

5. Fixation de réservoir de carburant selon l'une quelconque des revendications 1 à 4, **caractérisée en ce que** le logement de réservoir (22) peut, dans sa deuxième position de fonctionnement, lorsque l'appui (20) est disposé dans la première position de fonctionnement, être appuyé sur un support (40, 42) de la base de fixation (18), ou/et **caractérisée en ce que** le logement de réservoir (22) peut être fixé à la base de fixation (18) au moyen d'un dispositif de fermeture par emboîtement (44, 46) dans la deuxième position de fonctionnement, lorsque l'appui (20) est disposé dans la première position de fonctionnement.

6. Fixation de réservoir de carburant selon la revendication 5, **caractérisée en ce que** le dispositif de fermeture comprend une serrure (46) attachée à la base de fixation, qui peut être amenée en engagement de fermeture avec un élément de fermeture (44) de la base de fixation (18), dans laquelle la serrure peut être actionnée électriquement ou mécaniquement pour ouvrir l'engagement de fermeture, ou/et dans laquelle la serrure (46) comporte un détecteur de fermeture électrique, qui réagit à l'état de présence de l'engagement de fermeture et à l'état d'ouverture de l'engagement de fermeture et envoie un signal d'état correspondant à un dispositif de commande associé.

7. Fixation de réservoir de carburant selon l'une quelconque des revendications précédentes, **caractérisée en ce que** l'appui (20) est réalisé sous forme de bras à profil en U, dans laquelle de préférence le ressort pneumatique ou hydropneumatique (80) ou/et au moins un ressort de support exerçant des forces de pivotement sur le logement de réservoir en direction de la deuxième position de fonctionnement est articulé à une articulation attachée entre deux ailes de profil en U opposées l'une à l'autre du bras à profil en U.

8. Fixation de réservoir de carburant selon l'une quelconque des revendications précédentes, **caractérisée en ce que** la base de fixation (18) est réalisée sous forme rigide, de préférence avec un profilé de raidissement (24) raidissant une plaque de la base de fixation (20), disposé sur la face inférieure de celle-ci et soutenant en collaboration avec la plaque de la base de fixation un élément d'articulation (26) du premier dispositif d'articulation pivotante, et qui est réalisé de préférence sous forme de profil en U, de préférence encore sous forme de profil en U se rétrécissant en forme de V dans la direction s'éloignant du premier dispositif d'articulation pivotante.

9. Fixation de réservoir de carburant selon l'une quelconque des revendications précédentes, **caractérisée en ce que** le logement de réservoir peut être fixé dans sa deuxième position de fonctionnement, contre un déplacement hors de la deuxième position de fonctionnement, par un système de fixation (80) actif entre l'appui (20) et le logement de réservoir (22), dans laquelle le système de fixation comprend un ressort pneumatique ou hydropneumatique (80) pouvant être bloqué, avec lequel le logement de réservoir (22) peut être bloqué au moins dans sa deuxième position de fonctionnement contre un pivotement par rapport à l'appui (20) autour du deuxième axe de pivotement.

10. Fixation de réservoir de carburant selon la revendication 9, **caractérisée en ce que** le logement de réservoir (22) peut aussi être bloqué dans sa deuxième position de chargement, avec le ressort pneumatique ou hydropneumatique (80), contre un pivotement par rapport à l'appui autour du deuxième axe de pivotement.

11. Fixation de réservoir de carburant selon la revendication 9 ou 10, .**caractérisée en ce que** le ressort pneumatique ou hydropneumatique (80) forme une butée définissant la deuxième position de chargement du logement de réservoir (22) et limitant un mouvement de pivotement du logement de réservoir (22) de la deuxième position de fonctionnement à la deuxième position de chargement.

12. Fixation de réservoir de carburant selon l'une quelconque des revendications 9 à 11, **caractérisée en ce que** le ressort pneumatique ou hydropneumatique (80) peut être commuté, au moyen d'une télécommande (86), entre un état de blocage, dans lequel le logement de réservoir (22) est immobilisé par le ressort pneumatique ou hydropneumatique (80) contre un pivotement autour du deuxième axe de pivotement et un état de libération, dans lequel le ressort pneumatique ou hydropneumatique (80) permet un pivotement du logement dé réservoir autour du deuxième axe de pivotement.

13. Fixation de réservoir de carburant selon la revendication 12, **caractérisée en ce que** la télécommande (86) est disposée sur une partie d'extrémité du logement de réservoir (22) plus éloignée du premier axe de pivotement, de préférence à proximité immédiate d'une poignée (88) avec laquelle il est possible d'exercer sur le logement de réservoir (22) des forces de déplacement manuelles pour le pivotement autour du premier axe de pivotement ou/et du deuxième axe de pivotement, ou/et **caractérisée en ce que** le ressort pneumatique ou hydropneumatique (80) occupe l'état de blocage sans actionnement manuel de la télécommande (86).

14. Fixation de réservoir de carburant selon l'une quelconque des revendications 9 à 13, **caractérisée en ce que** le ressort pneumatique ou hydropneumatique (80) est conçu de façon à amortir un mouvement de pivotement du logement de réservoir (22) par rapport à l'appui autour du deuxième axe de pivotement ou/et à exercer sur le logement de réservoir des forces de pivotement agissant en direction de la deuxième position de fonctionnement du logement de réservoir (22).

15. Chariot élévateur à fourche qui présente, en association avec une surface supérieure d'un contrepoids, une fixation de réservoir de carburant (16) selon l'une quelconque des revendications précédentes, avec laquelle au moins un réservoir de carburant (14a, 14b) peut être attaché sur la surface supérieure du contrepoids, de préférence **caractérisée en ce que** la base de fixation (18) est vissée sur le contrepoids ou/et **en ce que** la base de fixation (18) est disposée entre la surface du contrepoids et une couverture (12) présentant une surface libre.
